# EUROPEAN PATENT APPLICATION

(11) **EP 1 289 279 A2**
(43) Date of publication of application: **05.03.2003**
(21) Application number: 02255648.4
(22) Date of filing: 13.08.2002
(51) Int. Cl.: H04N 5/00, H04N 7/24, H04N 7/58

(54) **System for multiplexing video data streams in a digital video recorder and method of operating the same**

(30) Priority: 31.08.2001 US 943837
(71) Applicant: STMicroelectronics, Inc., Carrollton Texas 75006-5039 (US)
(72) Inventor: Haddad, Semir S., Résidence Lully, Apt. 213, 13090 Aix-en-Provence (FR)
(74) Representative: Style, Kelda Camilla Karen

(57) **Abstract**

There is disclosed systems for multiplexing packetized elementary streams in a digital video recorder (DVR), methods of operating the same, and multiplexed program streams. One such system is associated with a DVR and operates to multiplex packetized elementary streams into a multiplexed program stream, the packetized elementary streams comprising PES packets of disparate size. The system is operable to (i) receive the PES packets into a memory buffer, (ii) reformat each of the received PES packets into at least one fixed-size program packet having a header and a payload, the header defining a payload content, and (iii) associate ones of the at least one fixed-size program packets into the multiplexed program stream.

## Description

### CROSS-REFERENCE TO RELATED APPLICATIONS

The present invention is related to those disclosed in the following United States Patent Applications:
1. Serial No. [Docket No. 01-S-017], filed concurrently herewith, entitled AAPPARATUS AND METHOD FOR INDEXING MPEG VIDEO DATA TO PERFORM SPECIAL MODE PLAYBACK IN A DIGITAL VIDEO RECORDER@;
2. Serial No. [Docket No. 01-S-018], filed concurrently herewith, entitled ADIGITAL VIDEO RECORDER USING CIRCULAR FILE MANAGEMENT AND METHOD OF OPERATION@;
3. Serial No. [Docket No. 01-S-019], filed concurrently herewith, entitled ASYSTEM FOR DETECTING START CODES IN MPEG VIDEO STREAMS AND METHOD OF OPERATING THE SAME@; and
4. Serial No. [Docket No. 01-S-020], filed concurrently herewith, entitled AAPPARATUS AND METHOD FOR SYNCHRONIZING VIDEO AND AUDIO MPEG STREAMS IN A VIDEO PLAYBACK DEVICE@.

The above applications are commonly assigned to the assignee of the present invention. The disclosures of these related patent applications are hereby incorporated by reference for all purposes as if fully set forth herein.

### TECHNICAL FIELD OF THE INVENTION

The present invention is generally directed to digital video playback device and, more specifically, to a system for multiplexing packetized elementary streams in a digital video recorder (DVR) and method of operating the same.

### BACKGROUND OF THE INVENTION

Digital video recorder (DVR) systems are becoming increasingly popular with consumers. Digital video recorder systems use magnetic hard disk drives rather than magnetic cassette tapes to store video programs. For example, the ReplayTVJ recorder and the TiVOJ recorder record television programs in digital formats on hard disk drives using, for example, MPEG-2 compression. Also, some DVR systems may record on a readable/writable digital versatile disk (DVD) rather than a magnetic disk.

MPEG-2 compression is essential for storing a recorded television program. An uncompressed video program would require an enormous (and impractical) amount of storage space on a disk drive. Similarly, multimedia systems require an enormous amount of bandwidth to provide services such as video-on-demand, videoconferencing, and the like. However, the inherent limitations on network bandwidth are a primary inhibitor to the performance of such systems.

Therefore, compression and communication standards have been developed to overcome the bandwidth limitations of conventional communication networks. These standards define the compression of video and audio data and the delivery of control data in a single bit stream transmitted in a frequency band that would before only accommodate an analog program.

Moving Picture Experts Group (MPEG) is a family of audio and video compression standards. In the MPEG-2 standard, video compression is defined both within a given video frame (i.e., spatial compression) and between frames (i.e., temporal compression). Spatial compression is accomplished by conversion of a digital image from the time domain to the frequency domain by a discrete cosine transform, quantization, variable length coding, and Huffman coding. Temporal compression is accomplished via a process referred to as motion compensation in which a motion vector is used to describe the translation of picture elements between pictures (or frames).

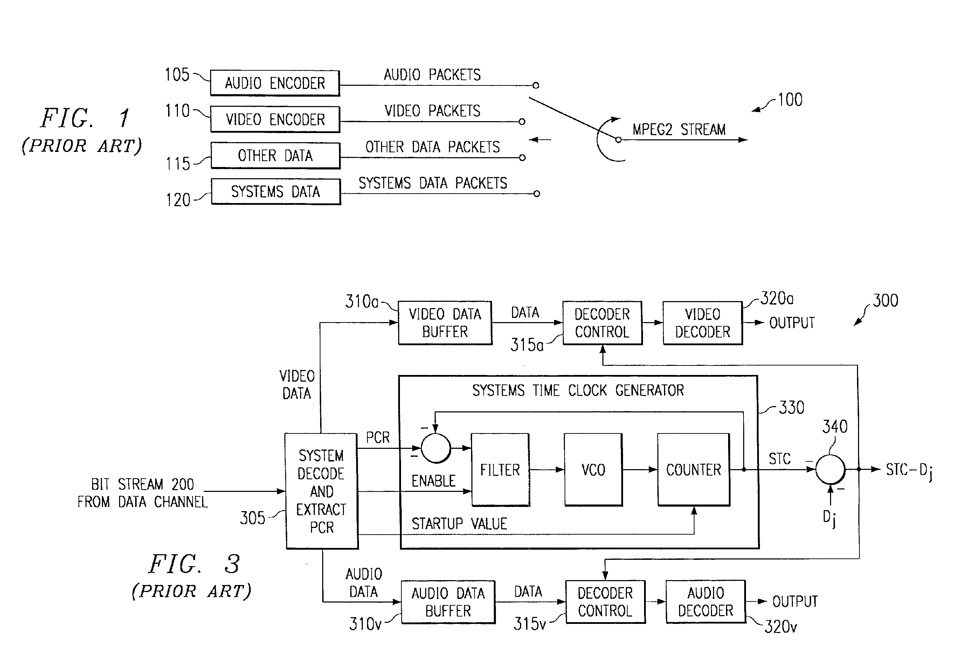

ISO 13818-1 is the transport layer portion of the MPEG-2 standard, and specifies: i) packetization of audio and video elementary bit streams into packetized elementary streams (PESs), and ii) combination of audio and video PESs into a single time division or packet multiplexed bit stream for transmission and subsequent de-multiplexing into multiple bit streams for decompression and display. The single time division or packet multiplexed bit stream is as shown from various conceptual perspectives in FIGURES 1 to 5.

FIGURE 1 illustrates a conceptual block diagram (generally designated 100) of the packetization of audio and video elementary bit streams and packet multiplexing according to an exemplary embodiment of the prior art. Distinct elementary streams are formed in audio encoder 105, video encoder 110, auxiliary (or other data) source 115, and systems data source 120. Each of these elementary streams is packetized into a packetized elementary stream (PES). The packetized elementary streams of audio data, video data, and the packets of other data and systems data are packet multiplexed by a MPEG-2 multiplexor into an MPEG-2 system stream.

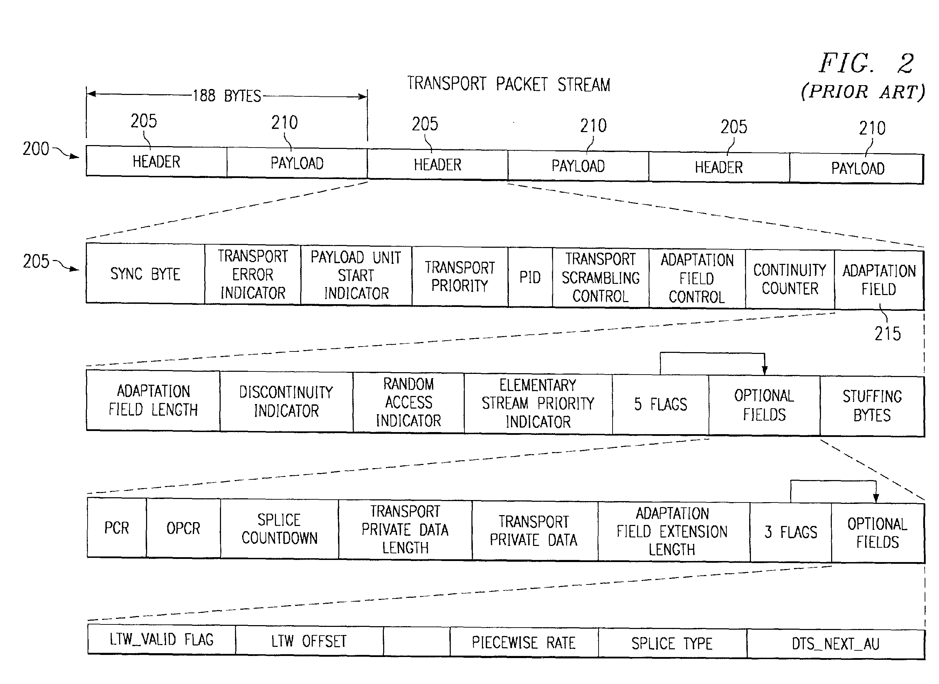

FIGURE 2 illustrates a conceptual block diagram of an exemplary time-division or packet-multiplexed bit stream (generally designated 200) according to an exemplary embodiment of the prior art. Bit stream 200 comprises a transport packet stream, wherein each packet illustratively comprises packet header 205 and payload 210 (i.e., packet data bytes) and, according to FIGURE 2, optional adaptation field 215. An MPEG-2 bit stream comprises two layers, namely, a system layer (also referred to as an outer layer, a control layer, or the like) and a compression layer (also referred to as an inner layer, a payload layer, a data layer, or the like).

The MPEG-2 system layer facilitates (i) multiplexing one or more programs made up of related audio and video bit streams into a single bit stream for transmission through a transmission medium, and (ii) de-multiplexing of the single bit stream into separate audio and video program bit streams for decompression while maintaining synchronization. The system layer defines data stream syntax for timing control and synchronization and interleaving of the video and audio bit streams. The system layer is capable of: i) video and audio synchronization, ii) stream multiplexing, iii) packet and stream identification, iv) error detection, v) buffer management, vi) random access and program insertion, vii) private data, viii) conditional access, and ix) interoperability with other networks, such as those using asynchronous transfer mode (ATM). The MPEG-2 compression layer comprises the coded video and audio data streams. The system layer provides control data for multiplexing and de-multiplexing interleaved compression layers and, in doing so, defines those functions necessary for combining the compressed data streams.

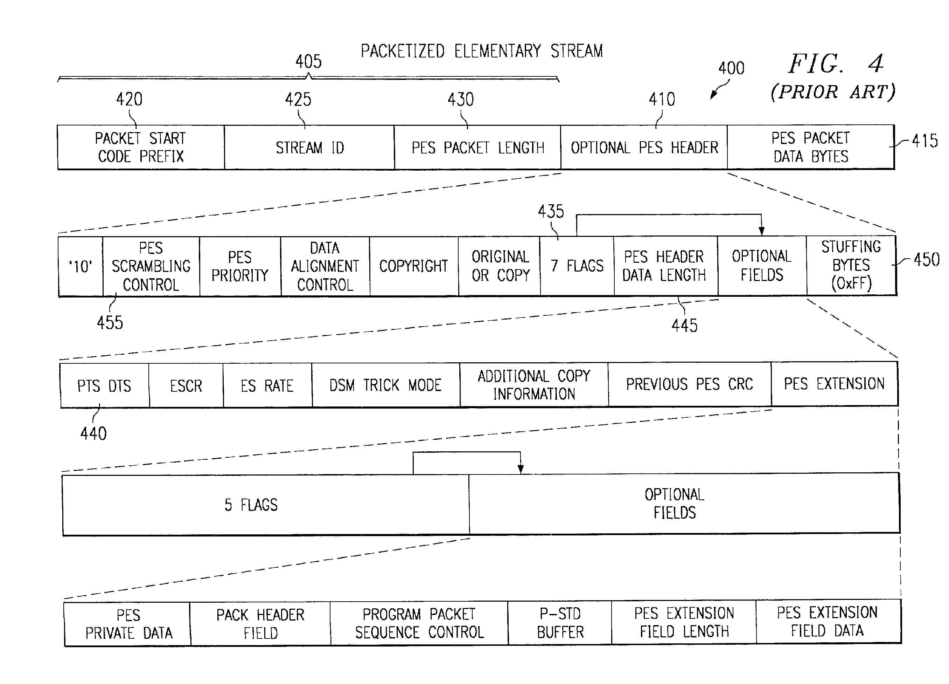

FIGURE 3 illustrates a conceptual block diagram of an MPEG-2-compliant decoding system (generally designated 300) according to an exemplary embodiment of the prior art. The components of decoding system 300 are well known to the skilled in the art and are therefore introduced for illustrative purposes only. Discussion of the functionality of these components will therefore be limited.

Decoding system 300 receives bit stream 200 as an input to system decoder 305. System decoder 305 de-multiplexes the system layer data of bit stream 200 into the compressed audio layer, the compressed video layer, and control data. The exemplary compressed audio layer data and video layer data are transferred to audio data buffer 310a and video data buffer 310v, respectively. The audio layer data is subsequently processed in audio decoder control block 315a and audio decoder 320a. The video layer data is subsequently processed in video decoder control block 315v and video decoder 320v. Exemplary control data is shown as program clock recovery (PCR) data, enable data, and startup values.

The MPEG-2 system layer supports a plurality of functions, namely, i) packet multiplexing and de-multiplexing of multiplexed multiple bit streams, ii) synchronous display of multiple coded bit streams, iii) buffer management and control, iv) time recovery and identification, v) random access, vi) program insertion, vii) conditional access, and viii) error tracking.

The MPEG-2 standard specifies two types of layer coding, namely, a program stream (PS) layer coding for relatively loss-less environments (e.g., CD-ROMS, DVDs, etc) and transport stream (TS) layer coding for lossy environments (e.g., cable television, satellite television, or other broadcast environments). Referring back to FIGURE 2, bit stream 200 is illustratively a transport stream (TS) consisting of a plurality of TS packets divided into a packet header, an optional adaptation field, and the associated packet data (or payload). By contrast FIGURE 4 illustrates a conceptual block diagram of a PES (generally designated 400) according to an exemplary embodiment of the prior art.

Packetized elementary stream (PES) 400 comprises packet header 405, optional PES header 410, and associated packet data 415. Packet header 405 comprises packet start code prefix 420, stream identifier (ID) 425, and PES packet length indicator 430. In accord herewith, all of the fields after PES packet length indicator 430 are optional. PES header 410 includes a presentation time stamp (PTS) field, a decoding time stamp (DTS) field, an elementary stream clock reference (ESCR) field, a elementary stream (ES) rate field, a DSM trick mode field, a copy information field, a prior PES clock recovery field, an extension field, and stuffing bytes.

Packet start code prefix 420 provides packet synchronization. Stream ID 425 provides packet identification and payload identification. PTS/DTS flag fields 435 and PTS/DTS fields 440 provide presentation synchronization. Data transfer is provided through the packet/header length 445, payload 415, and stuffing fields 450. Scramble control field 455 facilitates payload descrambling.

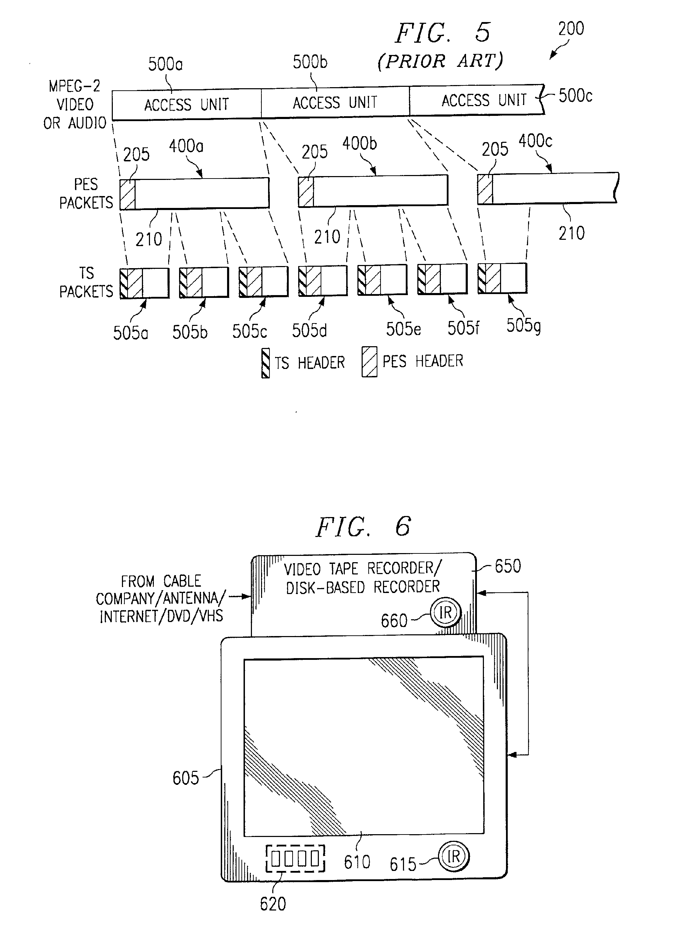

FIGURE 5 illustrates a conceptual block diagram of an alternate time-division or packet-multiplexed bit stream (generally designated 200) according to an exemplary embodiment of the prior art. Bit stream 200 comprises access units 500, PES packets 400, and a plurality of TS packets 505. Bit stream 200 illustrates a layering relationship among access units 500, PES packets 400, and TS packets 505.

The TS layer operates to combine programs made up of PES-coded data with one or more independent time bases into a single stream.

In accord with MPEG-2, a specific program does not require a unique time base, but if it does have a unique time base, the time base is the same for all of the elements of that program.

The PES layer is an inner layer portion of the MPEG-2 time division or packet multiplexed stream upon which the transport or program streams are logically constructed. The PES layer provides stream specific operations and supports the following: i) a common base of conversion between program and transport streams, ii) time stamps for video and audio synchronization and associated timing, especially for associated audio and video packets making up a broadcast channel, presentation, or program (collectively hereafter Programs), and having a common time base, iii) stream identification for stream multiplexing and de-multiplexing, and iv) such services as scrambling, VCR functions, and private data.

FIGURE 5 further illustrates that, in accord with MPEG-2, each video or audio elementary stream (ES) is PES-packetized before insertion into a transport stream (TS). Elementary streams are continuous and PES packets containing an ES are generally of fixed lengths. Typically, video PES packets are on the order of tens of thousands of bytes and audio PES packets are on the order of thousands of bytes. However, video PES packets can also be specified as of undefined length. ES data, that is, access units 500, are first encapsulated into PES packets, which are, in turn, inserted into TS packets.

A transport stream may contain one or more independent, individual programs, such as individual broadcast television programs, whereby each individual program may have its own time base, and each stream comprises an individual program having its own packet identification (PID). Each separate individual program has one or more elementary streams generally having a common time base. While not illustrated in the PRIOR ART figures, different transport streams may be combined into a single system TS.

At the transport layer, the transport sync byte provides packet synchronization. The PID field data provides packet identification, de-multiplexing and sequence integrity data. The PID field is operable to collect the packets of a stream and reconstruct the stream. Continuity counters and error indicators provide packet sequence integrity and error detection. The payload unit start indicator and adaptation control are used for payload synchronization, while the discontinuity indicator and program clock reference (PCR) fields are used for playback synchronization. The transport scramble control field facilitates payload descrambling. Private data transfer is accomplished through the private data flag and private data bytes. The data bytes are used for private payload data transfer, and the stuffing bytes are used to round out a packet.

A transport stream is a collection of transport stream packets linked by standard tables. These tables carry program specific information (PSI) and are built when a TS is created at the multiplexor. These tables completely define the content of the stream. Two of the tables of the TS are the program association table (PAT) and the program map table (PMT). The PAT operates as a table of contents for the TS that contains a unique identifier for the stream, a version number enabling dynamic changes of the PAT and the TS, and an association table of pairs of values. The pairs of values, PN, and PMT-PID, are the program number (PN) and the PID of the tables containing the program.

The PMT, on the other hand, describes all streams comprising a program. Each entry in the PMT is related to one program. The PMT provides a mapping between packets and programs, and contains a program number that identifies the program within the stream, a descriptor to carry private information about the program, the PID of the packets that contain the synchronization information, a number of pairs of values (e.g., stream type (ST), Data-PID) which, for each stream, specify the ST and the PID of the packets containing the data of that stream or program (Data-PID).

Collectively, these tables are used to process a particular program. At any point in time, each program has a unique PID in the PMT, which provides the PIDs for the selected program=s audio, video, and control streams. The streams with the selected PIDs are extracted and delivered to the appropriate buffers and decoders for reconstruction and decoding.

Achieving and maintaining clock recovery and synchronization is a problem, especially with audio and video bit streams. In accord with the MPEG-2 standard, an end-to-end constant delay timing model digital image and audio data take the same amount of time to pass through the system from encoder to decoder. The system layer contains timing information that requires constant delay. The clock references are program clock reference (PCR) and the time stamps are the PTS and DTS.

Synchronization is accomplished using the program clock reference (PCR) data field in the TS adaptation field. PCR is typically a 42-bit field that is coded in two parts, a PCR base having a 33-bit value in units of 90 kHz, and a PCR extension having a 9-bit extension in units of 27 MHz, where 27 MHz is the system clock frequency. As a general rule, the first 33 bits of the first PCR received by the decoder initialize the counter in a clock generation, and subsequent PCR values are compared to clock values for fine adjustment. The difference between the PCR and the local clock can be used to drive a voltage-controlled oscillator, or a similar device or function, for example, to speed up or slow down the local clock.

Audio and video synchronization is typically accomplished through the presentation time stamp inserted in the PES header. The presentation time stamp is a 33-bit value in units of 90 kHz, where 90 kHz is the 27 MHZ system clock divided by 300. The presentation time stamp value indicates the time that the presentation unit should be presented to the user.

In digital video systems (e.g., MPEG-2 compliant digital video systems and HDTV compliant digital video systems), the transport layer is used to carry audio data, video data, and system data streams, in packets, to the individual decoders and system memory. The individual streams are multiplexed together with a set of buffer assumptions as defined in the MPEG-2 System Layer specification.

The popularity of digital video recorder (DVR) systems is due in part to enabling sophisticated time-shifted viewing, as well as to the ability of such systems to perform special play modes (also called "trick modes" or "trick plays"). Special play modes may include, among others "Fast Forward," "Slow Forward," "Normal Reverse," "Slow Reverse," "Fast Reverse," and the like. Special play modes are easier to perform if the DVR system knows the structure of the video stream and can jump directly to the video frames of interest.

To accomplish either, an improved scheme for multiplexing packetized elementary streams is need that is better suited for DVR applications. There is a need in the art for a digital video recorder (DVR) system that implements improved systems and related methods that reduce the complexity inherent to building transport streams and program streams from packetized elementary streams.

### SUMMARY OF THE INVENTION

To address the above-discussed deficiencies of the prior art, it is a primary object of the present invention to provide systems and related methods to multiplex packetized elementary streams in a digital video recorder (DVR) for temporary storage and later playback. A primary object hereof is to provide an efficient means by which to multiplex the several packetized elementary streams into a single multiplexed program stream.

According to one advantageous embodiment, the system is embodied in a controller that is associated with the DVR. The controller operates to multiplex packetized elementary streams into a multiplexed program stream, wherein the packetized elementary streams comprise PES packets of disparate size and the multiplexed program stream comprises program packets of a fixed size. According to this embodiment, the controller is operable to:
(i) receive the PES packets into a memory buffer associated with the DVR,
(ii) reformat each of the received PES packets into at least one fixed-size program packet having a header and a payload, the header defining a payload content, and
(iii) associate ones of the at least one fixed-size program packets into the multiplexed program stream and store the multiplexed program stream in a storage disk, also associated with the DVR.

The exemplary controller, while multiplexing the packetized elementary streams, preferably makes no assumption concerning the nature of the PES packets. The controller simply reformats each PES packet into one fixed-size program packet after another, each with a proper header. The resulting multiplexed program stream comprises fixed-size program packets wherein the size may advantageously be set equal to a multiple of the sector size of the storage disk.

In this scenario, in the event that a disk error occurs, as few as a single packet may necessarily be dismissed. The use of fixed-size packets is an important aspect hereof, enabling the de-multiplexer to dismiss the effected-program packet upon disk error occurrence and proceed to process a "next" program packet in sequence. In short, the de-multiplexer "knows" the location where this next program packet begins. In stark contrast, if packet size is not known (e.g., packet size coded within the program packet, etc.), the de-multiplexer does not know the location of the "next" program packet upon disk error occurrence.

According to one related embodiment of the present invention, each program packet header defines at least one of stream type, timing information or picture information. In an advantageous embodiment hereof, each such header also has a fixed size.

According to one embodiment of a DVR of the present invention, the DVR is capable of playing back a recorded program stream and comprises each of a video processor, a storage disk, and a controller. The video processor operates to receive an incoming program stream and to convert the same to a baseband signal capable of being displayed on a television associated with the DVR. The controller operates to multiplex packetized elementary streams into a multiplexed program stream, wherein the packetized elementary streams comprise PES packets of disparate size. The controller is capable of (i) receiving the PES packets into a memory buffer, (ii) reformatting each of the received PES packets into at least one fixed-size program packet having a header and a payload, and (iii) associating and storing ones of the at least one fixed-size program packets into the multiplexed program stream in the storage disk. The principles hereof take advantage of the fact that the packetized elementary streams may suitably be parsed before recording (particularly, video streams, from which picture location may be easily determined).

The foregoing has outlined rather broadly the features and technical advantages of the present invention so that those skilled in the art may better understand the detailed description of the invention that follows. Additional features and advantages of the invention will be described hereinafter that form the subject of the claims of the invention. Those skilled in the art should appreciate that they may readily use the conception and the specific embodiment disclosed as a basis for modifying or designing other structures for carrying out the same purposes of the present invention. Those skilled in the art should also realize that such equivalent constructions do not depart from the spirit and scope of the invention in its broadest form.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. In particular, a controller may comprise a data processor and an associated memory that stores instructions that may be executed by the data processor. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present invention, and the advantages thereof, reference is now made to the following descriptions taken in conjunction with the accompanying drawings, wherein like numbers designate like objects, and in which:
FIGURE 1 illustrates a conceptual block diagram of the packetization of audio and video elementary bit streams and packet multiplexing according to an exemplary embodiment of the prior art;
FIGURE 2 illustrates a conceptual block diagram of an exemplary time-division or packet-multiplexed bit stream according to an exemplary embodiment of the prior art;
FIGURE 3 illustrates a conceptual block diagram of an MPEG-2-compliant decoding system according to an exemplary embodiment of the prior art;
FIGURE 4 illustrates a conceptual block diagram of a PES according to an exemplary embodiment of the prior art;
FIGURE 5 illustrates a conceptual block diagram of an alternate time-division or packet-multiplexed bit stream according to an exemplary embodiment of the prior art;
FIGURE 6 illustrates an exemplary digital video recorder (DVR) system and an associated television according to one embodiment of the present invention;
FIGURE 7 illustrates the exemplary digital video recorder (DVR) system in greater detail according to one embodiment of the present invention;
FIGURE 8 illustrates a flow diagram of an exemplary method of multiplexing packetized elementary streams into a program stream of fixed-size program packets for subsequent playback according to one embodiment of the present invention; and
FIGURE 9 illustrates a conceptual block diagram of a multiplexed program stream of fixed-size program packets according to one embodiment of the present invention.

### DETAILED DESCRIPTION OF THE INVENTION

FIGURES 1 through 10, discussed below, and the various embodiments used to describe the principles of the present invention in this patent document are by way of illustration only and should not be construed in any way so as to limit the scope of the invention. Those skilled in the art will understand that the principles of the present invention may be implemented in any suitably arranged digital video recorder (DVR) system.

FIGURE 6 illustrates exemplary digital video recorder (DVR) system 650 and television 605 according to one embodiment of the present invention. Digital video recorder system 650 receives incoming television signals from an external source, such as a set-top box of a cable television service provider (Cable Co.) or the phone company, a local antenna, the Internet, a satellite dish, an attached DVD or VHS tape player, or the like, and transmits a viewer-selected channel to television set 605.

According to an advantageous embodiment digital video recorder system 650 is capable of playing back recorded program streams. In RECORD mode, digital video recorder system 650 may demodulate an incoming radio frequency (RF) television signal to produce a baseband video signal that is recorded and stored on a storage medium within or connected to video playback device 650. In PLAY mode, digital video recorder system 650 retrieves a stored baseband video signal (*i.e.*, program) selected by the user from the storage medium and transmits the retrieved program to television 605.

According to an exemplary embodiment of the present invention, digital video recorder (DVR) system 650 is a disk drive-based device, such as a ReplayTVJ recorder or a TiVOJ recorder, DVR system 650 stores and retrieves the incoming television signals to and from a computer magnetic hard disk rather than a magnetic cassette tape. In still other embodiments, video playback device 650 may store and retrieve from a local read/write (R/W) digital versatile disk (DVD) or R/W CD-ROM. Thus, the local storage medium may be fixed (e.g., hard disk drive) or removable (e.g., DVD, CD-ROM). According to these embodiments, digital video recorder system 650 operates to multiplex received packetized elementary streams into a multiplexed program stream for later playback. The packetized elementary streams comprise many PES packets of disparate size. Digital video recorder system 650 operates to (i) receives the PES packets, (ii) reformat each received PES packet into at least one fixed-size program packet having a header and a payload, and (iii) associate and store ones of the fixed-size program packets into the multiplexed program stream to the storage medium.

Digital video recorder system 650 comprises infrared (IR) sensor 660 that receives commands (such as Channel Up, Channel Down, Volume Up, Volume Down, Record, Play, Fast Forward (FF), Reverse, Fast Reverse, Slow Reverse, and the like) from a remote control device operated by the viewer. Television 605 is a conventional television comprising screen 610, infrared (IR) sensor 615, and one or more manual controls 620 (indicated by a dotted line). IR sensor 615 also receives commands (such as volume up, volume down, power ON/OFF) from a remote control device operated by the viewer.

It should be noted that DVR system 650 is not limited to receiving a particular type of incoming television signal from a particular type of source. As noted above, the external source may be a cable service provider, a conventional RF broadcast antenna, a satellite dish, an Internet connection, or another local storage device, such as a DVD player. Thus, the incoming signal may be a conventional digital signal, such as MPEG-2, an conventional NTSC analog signal, or digital Internet protocol (IP) packets of any other communication protocol. However, for the purposes of simplicity and clarity in explaining the principles of the present invention, the descriptions that follow shall generally be directed to an embodiment in which DVR system 650 receives incoming television signals (analog and/or digital) from a cable service provider. Nonetheless, those skilled in the art will understand that the principles of the present invention may readily be adapted for use with wireless broadcast television signals, local storage systems, an incoming stream of IP packets containing MPEG data, and the like.

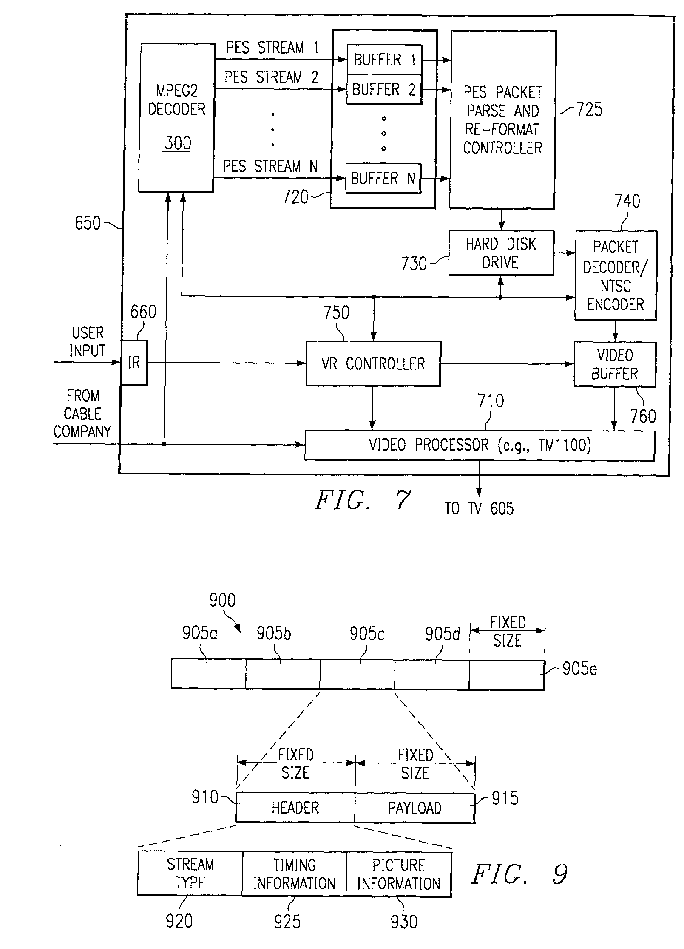

FIGURE 7 illustrates exemplary digital video recorder (DVR) system 650 in greater detail according to one embodiment of the present invention. DVR system 650 comprises IR sensor 660, video processor 710, MPEG2 Decoder 300, buffers 720, PES Packet Parse and Re-Format Controller 725, hard disk drive 730, Program Packet Decoder/NTSC encoder 740. DVR system 650 further comprises video buffer 760 and video recorder (VR) controller 750.

VR controller 750 directs the overall operation of DVR system 650, including View mode, Record mode, Play mode, Fast Forward (FF) mode, Reverse (Normal, Fast, Slow) mode, Pause mode, and Skip mode, among others. In View mode, VR controller 750 causes the incoming television signal from the exemplary cable service provider to be demodulated and processed by video processor 710 and transmitted to television 605, without storing or retrieving from hard disk drive 730.

The internal circuitry of DVR system 650 varies depending on whether the external broadcast signal received by DVR system 650 is digital, such as MPEG-2, or analog, such as NTSC. For example, if the external broadcast signal received from the cable service provider is an analog signal, video processor 710 may be, for example, a TriMedia (TM) 6100 media processor, which contains radio frequency (RF) front-end circuitry for receiving incoming analog television signals, tuning to a user-selected channel, and converting the selected RF signal to a baseband television signal (e.g., super video signal) suitable for display on television set 605.

In RECORD mode, VR controller 750 causes the incoming television signal to be stored on hard disk drive 730 in the form of a multiplexed program signal of fixed-sized program packets. According to one embodiment of the present invention, DVR system 650 receives packetized elementary streams from MPEG2 Decoder 300 into memory buffer 740, the elementary streams comprising PES packets of varying sizes. Exemplary controller 725 reformats each of the buffered PES packets into at least one fixed-size program packet, and associates ones of the fixed-size program packets into the multiplexed program stream and stores the same in hard disk drive 730.

In one embodiment, an MPEG-2 encoder (not shown) may optionally be provided if the external broadcast signal is an analog signal. For example, under the control of VR controller 750, the MPEG-2 encoder may receive an incoming NTSC-type analog television signal and convert the received broadcast signal to MPEG-2 format for storage on hard disk drive 730 in accord with the principles of the present invention. Alternatively, if the external broadcast signal is already a digital signal, such as MPEG-2, then the MPEG-2 encoder may be omitted.

In PLAY mode, VR controller 750 directs hard disk drive 730 to stream the stored multiplexed program signal (i.e., program) to Program Packet Decoder/NTSC encoder 740, which converts the program packets from hard disk drive 730 to, for example, a super video (S-Video) signal that is buffered in video buffer 760 before video processor 710 transmits it to television 605.

For the purposes of this application and the claims that follow, hard disk drive 730 is defined broadly as a "storage disk," and includes any mass storage device that is both readable and writable, including conventional magnetic disk drives, and optical disk drives for read/write digital versatile disks (DVD-RW), re-writable CD-ROMs, and the like. In fact, hard disk drive 730 need not be fixed in the conventional sense that is permanently embedded in DVR system 650. Rather, hard disk drive 730 includes any mass storage device that is dedicated to DVR system 650 for the purpose of storing recorded television programs. Thus, hard disk drive 730 may include an attached peripheral drive or removable disk drives (whether embedded or attached), such as a juke box device that holds read/write DVDs or re-writable CD-ROMs. Furthermore, in an advantageous embodiment of the present invention, hard disk drive 730 may include external mass storage devices that DVR system 650 may access and control via a network connection (e.g., Internet protocol (IP) connection), including, for example, a disk drive in a home personal computer (PC) or a disk drive on a server at an Internet service provider (ISP).

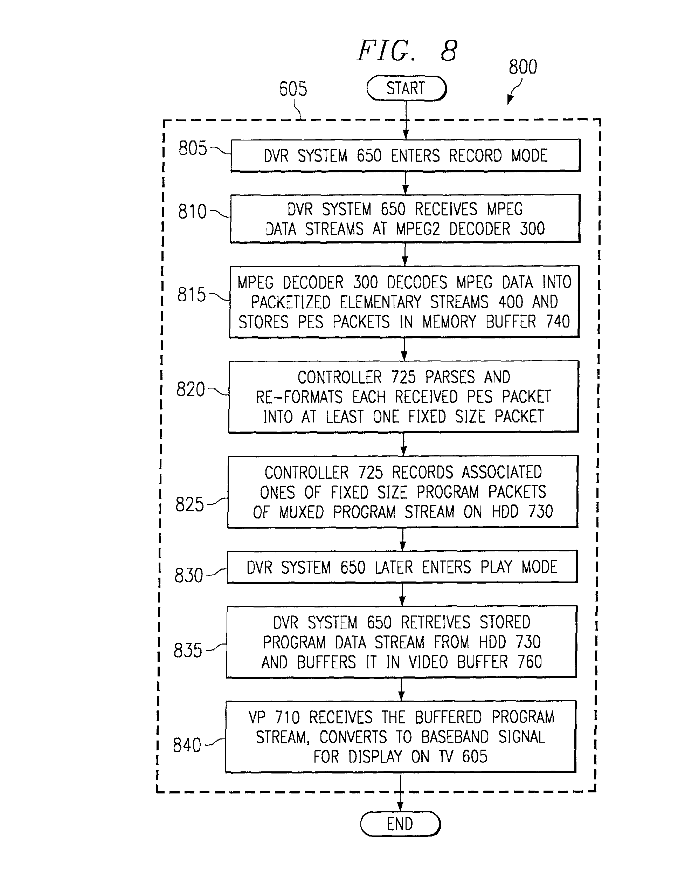

FIGURE 8 illustrates a flow diagram of an exemplary method (generally designated 800) of multiplexing packetized elementary streams into a program stream of fixed-size program packets for subsequent playback according to one embodiment of the present invention. For purposes of illustration only, concurrent reference is made to the discussion of FIGURES 6 and 7 above.

To begin, DVR system 650 is directed to enter into RECORD mode (process step 805). DVR system 650 receives MPEG data streams at MPEG2 Decoder 300 (process step 810). MPEG2 Decoder 300 decodes a plurality of packetized elementary streams 400 into memory buffer 740 for temporary storage (process step 815). The exemplary elementary streams are comprised of PES packets of varying sizes.

Controller 725 parses and re-formats each of the received PES packets into at least one fixed-size program packet (process step 820). Each fixed-size program packet includes a header and a payload. Controller 725 again preferably makes no assumption concerning the nature of the PES packets parsed. The controller simply reformats each PES packet into one fixed-size program packet after another, each with a proper header.

Controller 725 then records associated ones of the fixed-size program packets forming the multiplexed program stream in the storage disk, hard disk drive 730 (process step 825).

The resulting multiplexed program stream comprises fixed-size program packets wherein the size may advantageously be set equal to a multiple of the sector size of hard disk drive 730. In this scenario, in the event that a disk error occurs, as few as a single packet may necessarily be dismissed. The use of fixed-size packets is an important aspect hereof, enabling the de-multiplexer to dismiss the effected-program packet upon disk error occurrence and proceed to process a "next" program packet in sequence. In short, the de-multiplexer "knows" the location where this next program packet begins. In stark contrast, if packet size is not known (*e.g.*, packet size coded within the program packet, etc.), the de-multiplexer does not know the location of the "next" program packet upon disk error occurrence.

Returning to FIGURE 8, DVR system 650, at some later time, is directed to enter into PLAY mode (process step 830). DVR system 650 retrieves the stored program data stream from the storage disk, hard disk drive 730 and buffers the same in video buffer 760 (process step 835). Video processor 710 receives the buffered program stream, converting the same to a baseband signal capable of being displayed on television 605 associated with DVR system 605 (process step 840).

FIGURE 9 illustrates a conceptual block diagram of a multiplexed program stream (generally designated 900) of fixed-size program packets 905a-905e according to one embodiment of the present invention. For purposes of illustration only, concurrent reference is made to the discussion of FIGURES 6 to 8 above. Again, multiplexed program stream 900 may suitably recorded to a storage disk, such as hard disk drive 730, associated with DVR system 650.

Exemplary multiplexed program stream 900 illustratively comprises a plurality of fixed-size program packets 905, each of which, in turn, comprising reformatted ones of a plurality of PES packets of disparate size, each associated with a packetized elementary stream 400. Each of the fixed-size program packets 905 comprises a header 910 and a payload 915.

According to the illustrated embodiment, each fixed-size program packet 905 comprises a header 910 having a fixed size. Each header, regardless of size, defines a payload content of each associated payload 915, such as, for instance, defining at least one of a stream type 920, timing information 925 (*e.g*., time when program packet 905 was processed, etc.) and picture information 930 (*e.g*., information about the picture in a video stream, etc.).

Although the present invention has been described in detail, those skilled in the art should understand that they can make various changes, substitutions and alterations herein without departing from the spirit and scope of the invention in its broadest form.

## Claims

1. For association with a digital video recorder, a controller that multiplexes packetised elementary streams into a multiplexed program stream, said packetised elementary streams comprising PES packets of disparate size, said controller operable to (i) receive said PES packets into a memory buffer, (ii) reformat each of said received PES packets into at least one fixed-size program packet having a header and a payload, said header defining a payload content, and (iii) associate ones of said at least one fixed-size program packets into said multiplexed program stream.

2. The controller as set forth in Claim 1 further operable to store said multiplexed program stream in a storage disk.

3. A digital video recorder capable of playing back a recorded program stream, said digital video recorder comprising:
a video processor capable of receiving an incoming program stream and converting said incoming program stream to a baseband signal capable of being displayed on a television associated with said digital video recorder;
a storage disk; and
a controller that multiplexes packetised elementary streams into a multiplexed program stream, said packetised elementary streams comprising PES packets of disparate size, said controller operable to (i) receive said PES packets into a memory buffer, (ii) reformat each of said received PES packets into at least one fixed-size program packet having a header and a payload, and (iii) associate and store ones of said at least one fixed-size program packets into said multiplexed program stream in said storage disk.

4. A method of multiplexing packetised elementary streams into a multiplexed program stream for recording in a digital video recorder having a storage disk, said packetised elementary streams comprising PES packets of disparate size, said method comprising the steps of:
receiving said PES packets into a memory buffer;
reformatting each of said received PES packets into at least one fixed-size program packet having a header and a payload; and
recording associated ones of said at least one fixed-size program packets as said multiplexed program stream in said storage disk.

5. The method as set forth in Claim 4 further comprising the step of playing back said recorded program stream.

6. The method as set forth in Claim 5 wherein said digital video recorder comprises a video processor, said method further comprising the steps of:
receiving said played-back program stream; and
converting said received program stream to a baseband signal capable of being displayed on a television associated with said digital video recorder.

7. The controller or method as set forth in Claim 1, 3 or 4 wherein the fixed size of said at least one fixed-size program packets is a multiple of a sector size of said storage disk.

8. The controller or method as set forth in Claim 3 or 4 wherein each said header defines a payload content of each said at least one fixed-size program packet.

9. The controller or method as set forth in Claim 1 or 3 or 4 wherein each said header defines at least one of stream type, timing information and picture information.

10. The controller or method as set forth in Claim 1 or 3 or 4 wherein said header of each one of said at least one fixed-size program packet has a fixed size.

11. A multiplexed program stream recorded to a storage disk associated with a digital video recorder, sand multiplexed program stream comprising a plurality of fixed-size program packets, ones of a said plurality of fixed-size program packets comprising reformatted ones of a plurality of PES packets of disparate size, each of said plurality of PES packets associated with a packetised elementary stream received at said digital video recorder.

12. The multiplexed program stream as set forth in Claim 11 wherein each of said plurality of fixed-size program packets comprises a header and a payload, each said header defines at least one of stream type, timing information and picture information.

13. The multiplexed program stream as set forth in Claim 11 wherein each of said plurality of fixed-size program packets comprises a header and a payload, each said header having a fixed size.
